# EUROPEAN PATENT SPECIFICATION

(11) **EP 0 777 754 B1**
(45) Date of publication and mention of the grant of the patent: **11.11.1998**
(21) Application number: 95930458.5
(22) Date of filing: 14.08.1995
(51) Int. Cl.: C22C 18/04, H01M 4/42

(54) **ZINC POWDER FOR ALKALINE BATTERIES**
ZINKPULVER FÜR ALKALISCHE BATTERIEN
POUDRE DE ZINC POUR PILES ALCALINES

(30) Priority: 23.08.1994 BE 9400758
(43) Date of publication of application: 11.06.1997
(73) Proprietor: n.v. Union Miniere s.a., 1000 Brussels (BE)
(72) Inventor: STRAUVEN, Ivan A.J., 3580 Neerpelt (BE); MEEUS, Marcel L., 8300 Knokke-Heist (BE)
(86) International application number: EP9503229
(87) International publication number: WO9606196

(56) References cited:
- EP-A- 0 571 717
- JP-A- 4 289 661

## Description

This invention relates to an aluminium-containing zinc powder for alkaline batteries.

Aluminium-containing zinc powders are known from CA-A-2080762. The known powders comprise as impurity at most 1 ppm Fe and as alloying elements exclusively aluminium, bismuth and possibly either indium or lithium, or indium and calcium, or indium and lithium, as a result of which the evolution of gas is suppressed without having to make use of mercury and lead. The powders, however, have the disadvantage that their preparation requires special measures. Thus it is not possible to use cast zinc, and it is necessary to start from selected zinc cathodes which comprise ≤ 1 ppm Fe. The cathodes are fused together with the alloying elements and the smelt obtained is directly atomized. During these treatments, the atmosphere has to be conditioned so that it comprises less than 0.009 mg/m3 Fe. The powder obtained is subsequently further subjected to a magnetic separation in order to separate off the free iron. It is clear that those measures are somewhat cumbersome and costly. According to the applicant, even in those circumstances the risk remains high of contaminating the zinc powder with iron, for example through the materials used during the carrying out of the different treatments. Furthermore, most of the known powders exhibit the disadvantage that in a certain type of battery, namely the LR6 type, on discontinuous discharging they can give rise to short circuiting in the battery.

The object of the invention is to provide an aluminium-containing zinc powder for alkaline batteries that allows the disadvantages of the known powders to be avoided and that nevertheless has a satisfactory corrosion resistance.

The powder of the invention is characterized in that it consists of 0.0005-1 % of aluminium, of a quantity of calcium such that the molar ratio aluminium/calcium amounts at most to 2 and such that the sum of the concentrations of aluminium and calcium amounts at most to 2 %, of 0.001-2 % of at least one of bismuth, indium and gallium, the remainder being zinc, and in that it can comprise up to 20 ppm Fe. By zinc is meant here and in the following thermally or electrolytically refined zinc (Special High Grade) and by percentages, percentages by weight.

The applicant forgoes, however, protection for the following compositions according to the invention:
- the compositions which comprise ≤ 1 ppm Fe and at the same time exclusively Al, Ca, Bi and In as alloying elements as those compositions are described in CA-A-2080762
- the compositions which comprise ≤ 1 ppm Fe and at the same time exclusively Al, Ca and Bi as alloying elements as those compositions are described in EP-A-0500313
- Zn - 0.01 % Al - 0.025 % Ca- 0.05 % In- 0.05 % Bi - 3 ppm Fe, as that composition is mentioned as a comparative example in CA-A-2080762
- Zn - 0.05 % Al - 0.05 % Ca- 0.05 % Bi - 3 ppm Fe, as that composition is mentioned as a comparative example in EP-A-0500313.

The applicant has found that zinc powder that simultaneously comprises aluminium and calcium such that the molar ratio Al/Ca ≤ 2 and such that the sum of the concentrations of Al and Ca is ≤ 2 %, gives rise to nearly no or no short circuiting in the battery in which it is used. At the same time, the applicant has found, as will be shown furthermore, that those powders can comprise up to 20 ppm Fe and still have a suitable corrosion resistance, more particularly after partial or complete discharging of the battery. The other alloying elements (Bi and/or In and/or Ga) give the powder a satisfactory corrosion resistance before discharging. The powder is thus also suitable for use in every type of battery such as LR6, LR14, LR20 and others. The iron that the powder can comprise consists of the iron present as unavoidable impurity in the zinc and in the alloying elements and of the iron that is accidentally introduced into the powder during its preparation.

The molar ration Al/Ca amounts at most to 2, as at higher values short circuits can occur. The ratio is preferably at most 1.5, and especially at most 1.
The sum of the concentrations of Al and Ca amounts at most to 2%, preferably at most 1 % and especially at most 0.2 %. It is clear, when it is expected that the powder is going to have a fairly high Fe content, that the minimum quantity of Al and Ca that has to be added in order to obtain a suitable corrosion resistance will be higher than that quantity amounts to in the case of the powder having a low Fe content.

Further preferred compositions of the powder according to the invention form the object of the appended Claims 6-16.

A simple manner of producing the powder of the invention consists in adding all additives which should be present in the powder to be produced (for example Al, Ca and Bi) to molten zinc and to spray the alloy so obtained with gas, water or a mixture of both. It is also possible to spray molten zinc that already contains a portion of the additives (for example Al and Ca), after which the remainder of the additives (for example In) are deposited on the atomized powder, either by cementation from an aqueous solution, or by physical deposition from a gas phase ("Physical Vapour Deposition" or PVD), or by chemical deposition from a gas phase ("Chemical Vapour Deposition" or CVD). It is clear that the cementation technique can only be applied when dealing with additives which are more electropositive than zinc. When several additives are to be deposited on the atomized powder, these can be deposited simultaneously or separately. It is also possible to introduce a particular additive partially via the molten zinc and the rest of it by deposition on to the atomized powder.
Instead of atomizing with gas, water or a mixture of both, any technique can be applied which is suitable for converting a molten metal to a powder, such as for example centrifugal atomization or casting and breaking up the cast metal.
If the desired powder contains additives capable of cementation (for example In), then yet another manner of preparing the powder of the invention consists in preparing a powder with the additives which are not capable of cementation, and possibly a portion of the additives which are capable of cementation, according to one of the methods described above and from the powder so obtained to make an anode which is fitted in the battery. The additives which are capable of cementation are added to the electrolyte of the battery, from where they cement on to the powder of the anode. Thus the powder according to the invention is obtained in the battery itself.
This invention thus not only relates to a powder which can be introduced into the battery, but also to a powder which is present in the battery.

The examples described in the following demonstrate that powders according to the invention do not cause short circuiting in the battery and have good resistance to corrosion in the electrolyte of the battery after partial discharge of the battery.
13 powders were made with the following composition:
(1) Zn - 70 ppm Al - 500 ppm Bi
(2) Zn - 70 ppm Al - 500 ppm Bi - 500 ppm In
(3) Zn - 70 ppm Al - 5000 ppm Bi - 500 ppm In
(4) Zn - 70 ppm Al - 500 ppm Bi - 500 ppm In - 150 ppm Ca
(5) Zn - 30 ppm Al - 500 ppm Bi - 500 ppm In - 110 ppm Ca
(6) Zn - 70 ppm Al - 500 ppm Bi - 500 ppm In - 40 ppm Ca
(7) Zn - 250 ppm Al - 500 ppm Bi - 500 ppm In - 110 ppm Ca
(8) Zn - 70 ppm Al - 150 ppm Ca - 500 ppm Bi
(9) Zn - 70 ppm Al - 180 ppm Ca - 500 ppm Bi - 500 ppm In
(10) Zn - 250 ppm Al - 250 ppm Ca - 500 ppm Bi - 500 ppm In
(11) Zn - 70 ppm Al - 180 ppm Ca - 250 ppm Bi - 250 ppm In
(12) Zn - 250 ppm Al - 250 ppm Ca - 500 ppm In
(13) Zn - 70 ppm Al - 150 ppm Ca - 500 ppm Bi - 100 ppm Ga

For this purpose the starting point is
- for powders (1)-(7), refined zinc selected for Fe content ≤ 1 ppm
- for powders (8)-(13), refined zinc that is commercially available
in fluid state to which the alloying elements are added in the desired quantities. The molten zinc solution thus obtained is homogenized at 450°C by stirring. The molten alloy is allowed to flow away in a stream of gas and in this way an alloy powder is produced, the particles of which have nearly the same homogeneous composition as that of the homogeneous molten solution. During these treatments for the alloys (1)-(7), the atmosphere is conditioned so that it contains less than 0.009 mg/m3 Fe. The alloys (8)-(13) are made in an unconditioned atmosphere.

The alloy powder is sieved so that the fraction which is larger than 500 mm and, in so far as this is possible, the fraction that is smaller than 104 mm is separated from it. In this way an alloy powder is obtained with a particle size distribution of 104 to 500 mm. The alloy powders (1)-(7) are subsequently further subjected to a magnetic separation in order to separate off the free iron. The Fe content of all these powders is determined, see the table below. The powders (1)-(7) are powders according to the previously mentioned prior art and the powders (8)-(13) are powders according to the invention.

With the alloy powder are then made
- batteries of the type LR14
- batteries of the type LR6 in which a commercial separator is used which has low density.
The LR14 batteries are discharged at 2.2 ohms for 6 h and then the quantity of hydrogen liberated is determined. The LR6 batteries are discharged discontinuously in order to check whether a premature fall of the discharge curve occurs as a result of short circuiting. The results of both tests are presented summarized in the table below.

| Powder No. | Fe ppm | mol Al/mol Ca | Gas µl/g/day | Short circuiting |
|---|---|---|---|---|
| (1) | ≤ 1 | _ | 110.3 | yes |
| (2) | ≤ 1 | _ | 63.7 | yes |
| (3) | ≤ 1 | _ | 220.9 | yes |
| (4) | ≤ 1 | 0.69 | 62.7 | no |
| (5) | ≤ 1 | 0.41 | 111.8 | no |
| (6) | ≤ 1 | 2.60 | 75.8 | yes |
| (7) | ≤ 1 | 3.38 | 60.9 | yes |
| (8) | 2 | 0.69 | 89.4 | no |
| (9) | 3 | 0.58 | 101.9 | no |
| (10) | 3 | 1.49 | 60.9 | no |
| (11) | 2 | 0.58 | 78.3 | no |
| (12) | 2 | 1.49 | 64.6 | no |
| (13) | 2 | 0.69 | 87.0 | no |

Comparison of examples nos. (1) - (7) with examples nos. (8) - (13) shows that the powders according to the invention have a good corrosion resistance and do not give rise to short circuiting in the battery.

Other typical examples of powders according to the invention have the following composition:
Zn - 50 ppm Al - 120 ppm Ca - 500 ppm In - 2 ppm Fe
Zn - 100 ppm Al - 120 ppm Ca - 500 ppm In - 2 ppm Fe
Zn - 100 ppm Al - 120 ppm Ca - 500 ppm Bi - 2 ppm Fe
Zn - 250 ppm Al - 500 ppm Ca - 500 ppm Bi - 3 ppm Fe
Zn- 500 ppm Al- 1000 ppm Ca - 500 ppm Bi - 3 ppm Fe
Zn - 250 ppm Al - 500 ppm Ca - 500 ppm Ga - 2 ppm Fe
Zn - 480 ppm Al - 1000 ppm Ca - 500 ppm Ga - 3 ppm Fe
Zn - 100 ppm Al - 150 ppm Ca - 250 ppm In - 250 ppm Bi - 2 ppm Fe
Zn - 500 ppm Al - 700 ppm Ca - 500 ppm In - 500 ppm Bi - 5 ppm Fe
Zn - 80 ppm Al - 200 ppm Ca - 250 ppm In - 250 ppm Bi - 2 ppm Fe
Zn - 100 ppm Al - 180 ppm Ca- 250 ppm Ga - 250 ppm Bi - 2 ppm Fe
Zn - 120 ppm Al - 250 ppm Ca - 500 ppm Ga - 250 ppm Bi - 3 ppm Fe
Zn - 500 ppm Al - 1000 ppm Ca - 500 ppm Ga - 500 ppm Bi - 4 ppm Fe
Zn - 100 ppm Al - 200 ppm Ca - 250 ppm Ga - 250 ppm Bi - 250 ppm In - 2 ppm Fe
Zn - 700 ppm Al - 1200 ppm Ca - 500 ppm Ga - 500 ppm Bi - 250 ppm In - 3 ppm Fe
Zn - 1000 ppm Al - 1500 ppm Ca - 400 ppm Ga- 400 ppm Bi - 5 ppm Fe
Zn - 1000 ppm Al - 1200 ppm Ca - 250 ppm Ga - 400 ppm Bi - 3 ppm Fe
Zn - 250 ppm Al - 400 ppm Ca - 400 ppm Ga - 2 ppm Fe
Zn - 750 ppm Al - 1000 ppm Ca - 450 ppm Ga - 3 ppm Fe
Zn - 1000 ppm Al - 1000 ppm Ca - 300 ppm Ga - 2 ppm Fe
Zn - 350 ppm Al - 400 ppm Ca - 250 ppm Bi - 3 ppm Fe

These powders contain, besides zinc, Fe and the other unavoidable impurties, nothing other than the additives mentioned. The other unavoidable impurities are the impurities which are present in the zinc and in the additives.

## Claims

1. Aluminium-containing zinc powder for alkaline batteries, characterized in that it consists of 0.0005-1 wt. % of aluminium, of a quantity of calcium such that the molar ratio aluminium/calcium amounts at most to 2 and such that the sum of the concentrations of aluminium and calcium amounts at most to 2 wt. %, of 0.001-2 wt.% of at least one of bismuth, indium and gallium, the remainder being thermally or electrolytically refined zinc (Special High Grade), and in that it comprises up to 20 ppm of iron; excluded being the aluminium-containing zinc powders comprising at most 1 ppm Fe and at the same time exclusively Al, Ca and either Bi, or Bi and In, the aluminium-containing zinc powder consisting of Zn, 0.01 wt. % Al, 0.025 wt. % Ca, 0.05 wt. % In, 0.05 wt. % Bi and 3 ppm Fe and the aluminium-containing zinc powder consisting of Zn, 0.05 wt. % Al, 0.05 wt. % Ca, 0.05 wt.% Bi and 3 ppm Fe.

2. Powder according to Claim 1, characterized in that the molar ratio Al/Ca amounts at most to 1.5.

3. Powder according to Claim 2, characterized in that the molar ratio amounts at most to 1.

4. Powder according to Claim 1, 2 or 3, characterized in that the sum of the concentrations of Al and Ca amounts at most to 1 wt. %.

5. Powder according to Claim 4, characterized in that the sum amounts to at most 0.2 wt. %.

6. Powder according to one of Claims 1-5, characterized in that it comprises 10-1000 ppm Al.

7. Powder according to Claim 6, characterized in that it comprises 10-500 ppm Al.

8. Powder according to one of Claims 1-7, characterized in that it comprises 20-1000 ppm Bi.

9. Powder according to Claim 8, characterized in that it comprises 20-500 ppm Bi.

10. Powder according to one of Claims 1-9, characterized in that it comprises 20-1000 ppm In.

11. Powder according to Claim 10, characterized in that it comprises 20-500 ppm In.

12. Powder according to one of Claims 1-11, characterized in that it comprises 20-1000 ppm Ga.

13. Powder according to Claim 12, characterized in that it comprises 20-500 ppm Ga.

14. Powder according to one of Claims 1-13, characterized in that it comprises at most 10 ppm Fe.

15. Powder according to Claim 14, characterized in that it comprises at most 5 ppm Fe.

16. Powder according to Claim 15, characterized in that it comprises at most 3 ppm Fe.

17. Alkaline battery comprising an anode, a cathode and an electrolyte, characterized in that the anode comprises as active material a powder according to one of Claims 1-16.

18. Alkaline battery according to Claim 17, characterized in that the powder comprises metal cemented out of the electrolyte.

## Patentansprüche

1. Aluminiumhaltiges Zinkpulver für alkalische Batterien, dadurch gekennzeichnet, daß es aus 0,0005-1 Gew.-% Aluminium, einer solchen Menge Calcium, daß das Aluminium/Calcium-Molverhältnis höchstens 2 beträgt und sich die Summe der Konzentrationen an Aluminium und Calcium auf höchstens 2 Gew.-% beläuft, 0,001-2 Gew.-% mindestens eines der Elemente Bismut, Indium und Gallium, Rest thermisch oder elektrolytisch raffiniertes Zink (Special High Grade), besteht und daß es bis zu 20 ppm Eisen enthält; jedoch unter Ausschluß der aluminiumhaltigen Zinkpulver, die höchstens 1 ppm Fe und gleichzeitig ausschließlich Al, Ca und entweder Bi oder Bi und In enthalten, des aluminiumhaltigen Zinkpulvers aus Zn, 0,01 Gew.-% Al, 0,025 Gew.-% Ca, 0,05 Gew.-% In, 0,05 Gew.-% Bi und 3 ppm Fe und des aluminiumhaltigen Zinkpulvers aus Zn, 0,05 Gew.-% Al, 0,05 Gew.-% Ca, 0,05 Gew.-% Bi und 3 ppm Fe.

2. Pulver nach Anspruch 1, dadurch gekennzeichnet, daß das Al/Ca-Molverhältnis höchstens 1,5 beträgt.

3. Pulver nach Anspruch 2, dadurch gekennzeichnet, daß das Molverhältnis höchstens 1 beträgt.

4. Pulver nach Anspruch 1, 2 oder 3, dadurch gekennzeichnet, daß sich die Summe der Konzentrationen an Al und Ca auf höchstens 1 Gew.-% beläuft.

5. Pulver nach Anspruch 4, dadurch gekennzeichnet, daß sich die Summe auf höchstens 0,2 Gew.-% beläuft.

6. Pulver nach einem der Ansprüche 1-5, dadurch gekennzeichnet, daß es 10-1000 ppm Al enthält.

7. Pulver nach Anspruch 6, dadurch gekennzeichnet, daß es 10-500 ppm Al enthält.

8. Pulver nach einem der Ansprüche 1-7, dadurch gekennzeichnet, daß es 20-1000 ppm Bi enthält.

9. Pulver nach Anspruch 8, dadurch gekennzeichnet, daß es 20-500 ppm Bi enthält.

10. Pulver nach einem der Ansprüche 1-9, dadurch gekennzeichnet, daß es 20-1000 ppm In enthält.

11. Pulver nach Anspruch 10, dadurch gekennzeichnet, daß es 20-500 ppm In enthält.

12. Pulver nach einem der Ansprüche 1-11, dadurch gekennzeichnet, daß es 20-1000 ppm Ga enthält.

13. Pulver nach Anspruch 12, dadurch gekennzeichnet, daß es 20-500 ppm Ga enthält.

14. Pulver nach einem der Ansprüche 1-13, dadurch gekennzeichnet, daß es höchstens 10 ppm Fe enthält.

15. Pulver nach Anspruch 14, dadurch gekennzeichnet, daß es höchstens 5 ppm Fe enthält.

16. Pulver nach Anspruch 15, dadurch gekennzeichnet, daß es höchstens 3 ppm Fe enthält.

17. Alkalische Batterie, enthaltend eine Anode, eine Kathode und einen Elektrolyten, dadurch gekennzeichnet, daß die Anode als aktives Material ein Pulver nach einem der Ansprüche 1-16 enthält.

18. Alkalische Batterie nach Anspruch 17, dadurch gekennzeichnet, daß das Pulver aus dem Elektrolyten auszementiertes Metall enthält.

## Revendications

1. Poudre de zinc contenant de l'aluminium pour piles alcalines, caractérisée en ce qu'elle est constituée de 0,0005-1% en poids d'aluminium, d'une quantité de calcium telle que le rapport molaire aluminium/calcium s'élève au plus à 2 et telle que la somme des concentrations en aluminium et en calcium s'élève au plus à 2% en poids, de 0,001-2% en poids d'au moins l'un parmi le bismuth, l'indium et le gallium, le reste étant du zinc raffiné thermiquement ou électrolytiquement (Special High Grade), et en ce qu'elle comprend jusqu'à 20 ppm de fer; à l'exclusion des poudres de zinc contenant de l'aluminium comprenant au plus 1 ppm de Fe et en même temps exclusivement Al, Ca et soit Bi, soit Bi et In, la poudre de zinc contenant de l'aluminium étant constituée de Zn, de 0,01% en poids de Al, de 0,025% en poids de Ca, de 0,05% en poids de In, de 0,05% en poids de Bi et de 3 ppm de Fe, et la poudre de zinc contenant de l'aluminium étant constituée de Zn, de 0,05% en poids de Al, de 0,05% en poids de Ca, de 0,05% en poids de Bi et de 3 ppm de Fe.

2. Poudre selon la revendication 1, caractérisée en ce que le rapport molaire Al/Ca s'élève au plus à 1,5.

3. Poudre selon la revendication 2, caractérisée en ce que le rapport molaire s'élève au plus à 1.

4. Poudre selon la revendication 1, 2 ou 3, caractérisée en ce que la somme des concentrations en Al et Ca s'élève au plus à 1% en poids.

5. Poudre selon la revendication 4, caractérisée en ce que la somme s'élève au plus à 0,2% en poids.

6. Poudre selon l'une des revendications 1-5, caractérisée en ce qu'elle comprend 10-1 000 ppm de Al.

7. Poudre selon la revendication 6, caractérisée en ce qu'elle comprend 10-500 ppm de Al.

8. Poudre selon l'une des revendications 1-7, caractérisée en ce qu'elle comprend 20-1 000 ppm de Bi.

9. Poudre selon la revendication 8, caractérisée en ce qu'elle comprend 20-500 ppm de Bi.

10. Poudre selon l'une des revendications 1-9, caractérisée en ce qu'elle comprend 20-1 000 ppm de In.

11. Poudre selon la revendication 10, caractérisée en ce qu'elle comprend 20-500 ppm de In.

12. Poudre selon l'une des revendications 1-11, caractérisée en ce qu'elle comprend 20-1 000 ppm de Ga.

13. Poudre selon la revendication 12, caractérisée en ce qu'elle comprend 20-500 ppm de Ga.

14. Poudre selon l'une des revendications 1-13, caractérisée en ce qu'elle comprend au plus 10 ppm de Fe.

15. Poudre selon la revendication 14, caractérisée en ce qu'elle comprend au plus 5 ppm de Fe.

16. Poudre selon la revendication 15, caractérisée en ce qu'elle comprend au plus 3 ppm de Fe.

17. Pile alcaline comprenant une anode, une cathode et un électrolyte, caractérisée en ce que l'anode comprend, en tant que matière active, une poudre selon l'une des revendications 1-16.

18. Pile alcaline selon la revendication 17, caractérisée en ce que la poudre comprend du métal cémenté hors de l'électrolyte.
